# EUROPEAN PATENT SPECIFICATION

(11) **EP 3 240 833 B1**
(45) Date of publication and mention of the grant of the patent: **03.06.2020**
(21) Application number: 15876172.6
(22) Date of filing: 29.12.2015
(51) Int. Cl.: C09D 5/12, C09D 5/22, C09K 11/06, C09D 5/00

(54) **LUMINESCENT SILICONE COATINGS**
LUMINESZENTE SILIKONBESCHICHTUNGEN
REVÊTEMENTS DE SILICONE LUMINESCENTS

(30) Priority: 30.12.2014 US 201462097832 P
(43) Date of publication of application: 08.11.2017
(73) Proprietor: Momentive Performance Materials Inc., Waterford, NY 12188 (US)
(72) Inventor: MURUGESAN, Karthikeyan, Bangalore 560102 (IN); SIVASUBRAMANIAN, Karthikeyan, Bangalore 560102 (IN); RAMAKRISHNAN, Indumathi, Bangalore 56066 (IN); KHARE, Vivek, Bangalore 560102 (IN)
(74) Representative: Gille Hrabal
(86) International application number: PCT/US2015/067872
(87) International publication number: WO 2016/109542

(56) References cited:
- US-A- 4 395 461
- US-A1- 2004 086 744
- US-A1- 2005 040 368
- US-A1- 2005 040 368
- US-A1- 2009 000 509
- US-A1- 2014 342 164
- ZHANG ET AL.: 'Preparation and luminescence of europium(III) terpyridine complex-bridged polysilsesquioxanes' J. MATER. CHEM. vol. 21, no. 45, 01 January 2011, pages 18462 - 18466, XP055461115

## Description

### FIELD

The disclosed subject matter relates to luminescent coating compositions or systems for coating a variety of substrates. In particular, the subject matter relates to a coating composition that includes a luminescent additive. The coating compositions or systems can be used as a coating, such as in a hardcoat formulation.

### BACKGROUND

Polymeric materials, particularly thermoplastics such as polycarbonate, are promising alternatives to glass for use as structural material in a variety of applications, including automotive, transportation and architectural glazing applications, where increased design freedom, weight savings, and improved safety features are in high demand. Plain polycarbonate substrates, however, are limited by their lack of abrasion, chemical, ultraviolet (UV) and weather resistance, and therefore need to be protected with optically transparent coatings that alleviate above limitations in the aforementioned applications.

Silicone hardcoats have been traditionally used to improve the abrasion resistance and UV resistance of various polymers including polycarbonate and acrylics. This enables the use of polycarbonates in a wide range of applications, including architectural glazing and automotive parts such as headlights and windshields.

Similarly, customers have an interest in hardcoat formulations with luminescent features that provide aesthetic benefits as well as enabling certain safety related applications for hardcoated polycarbonates. To meet this demand, there is a need to find the right materials for silicone hardcoat compositions which will show luminescence under UV and day light conditions without affecting the existing properties of the silicone hardcoat formulations and their final coating properties like abrasion resistance, adhesion, opticals, and weatherability as required by the specific applications.

US-A-2005 040368 discloses temperature sensitive paint.

US-A-4 396 461 discloses a method to apply a protective coating onto a polycarbonate substrates for articles.

### SUMMARY

The present technology provides a coating composition as defined by claims 1 and 2 to 4, a coating system of claim 5, an articles of claims 6 to 7 and a method of forming a coating composition of claims 8 to 9.

These and other aspects and embodiments of the present technology are further understood and described with reference to the following detailed description when read in connection with the accompanying drawings.

### BRIEF DESCRIPTION OF THE DRAWINGS

Included in the drawings are the following Figures:
Figure 1 shows a graph of the UV spectra of one embodiment of the present technology; and
Figure 2 shows a graph of the UV spectra of additional embodiments of the present technology.

### DETAILED DESCRIPTION

The present technology provides a coating composition or system that exhibits luminescent properties. The coatings can be used to coat a variety of substrates and can be used, for example, as a topcoat to provide abrasion resistance to certain surfaces. The coating compositions or systems include a luminophoric material. In one embodiment, the luminophoric material can be chosen from a pyridine-based, e.g., a terpyridine-based lanthanide complex, an organic fluorescent dye or pigment, an inorganic fluorescent dye or pigment, or a combination of two or more thereof. The coating formulations may be coated onto a substrate to provide qualities of abrasion resistance and luminescence.

As used herein, the term "alkyl" includes straight, branched, and cyclic alkyl groups. Specific and non-limiting examples of alkyls include, methyl, ethyl, propyl, isobutyl, and cyclohexyl.

As used herein, the term "substituted alkyl" includes an alkyl group that contains one or more substituent groups that are inert under the process conditions to which the compound containing these groups is subjected. Suitable substituents can include, alkyl, aryl, alkenyl, alkynyl, etc. The substituent groups also do not substantially or deleteriously interfere with the process.

As used herein, the term "aryl" refers to a non-limiting group of any aromatic hydrocarbon from which one hydrogen atom has been removed. An aryl may have one or more aromatic rings, which may be fused, connected by single bonds or other groups. Examples of suitable aryls include, tolyl, xylyl, phenyl, and naphthalenyl.

As used herein, the term "substituted aryl" refers to an aromatic group substituted as set forth in the above definition of "substituted alkyl." Similar to an aryl, a substituted aryl may have one or more aromatic rings, which may be fused, connected by single bonds or other groups. When the substituted aryl has a heteroaromatic ring, the attachment can be through a heteroatom (such as nitrogen) of the heteroaromatic ring instead of a carbon. In one embodiment, the substituted aryl groups herein contain 1 to 30 carbon atoms.

As used herein, the term "alkenyl" refers to any straight, branched, or cyclic alkenyl group containing one or more carbon-carbon double bonds, where the point of substitution can be either a carbon-carbon double bond or elsewhere in the group. Examples of suitable alkenyls include, vinyl, propenyl, allyl, methallyl and ethylidenyl norbornyl.

As used herein, the term "alkynyl" refers to any straight, branched, or cyclic alkynyl group containing one or more carbon-carbon triple bonds, where the point of substitution can be either at a carbon-carbon triple bond or elsewhere in the group.

As used herein, the term "unsaturated" refers to one or more double or triple bonds. In one embodiment, it refers to carbon-carbon double or triple bonds.

As used herein, the term "inert substituent" refers to a group other than hydrocarbyl or substituted hydrocarbyl, which is inert under the process conditions to which the compound containing the group is subjected. The inert substituents also do not substantially or deleteriously interfere with any process described herein that the compound in which they are present may take part in. Examples of inert substituents include, halo (fluoro, chloro, bromo, and iodo), and ether such as -OR wherein R is hydrocarbyl or substituted hydrocarbyl.

As used herein, the term "hetero atoms" refers to any of the Group 13-17 elements except carbon, and can include, for example, oxygen, nitrogen, silicon, sulfur, phosphorus, fluorine, chlorine, bromine, and iodine.

In one aspect, the present technology provides a coating composition or system for coating an article or substrate. The coating composition may be configured to provide a relatively hard coating that may provide abrasion resistance and/or other desirable properties to the substrate. In accordance with aspects of the technology, the coating composition or system comprises a luminophoric material. The coating system comprises an outer (topcoat) layer and optional primer layer. Depending on the nature of the coating composition and the substrate to be coated, a primer layer or coating may need to be applied over the substrate to promote adhesion of the outer protective coating or topcoat layer. As used herein, the phrase "coating system" may refer to a topcoat layer alone or the combination of the primer layer and the outermost or topcoat layer.

In accordance with the present technology, the topcoat layer, the primer coating layer, or both the topcoat layer, and the primer coating layer comprises a luminophoric material. The luminophoric material may be chosen from a pyridine-containing lanthanide complex, e.g., a tepyridial-based lanthanide complex, an organic dye or pigment, an inorganic dye or pigment, or a combination of two or more thereof.

In one embodiment, the luminophoric material comprises a pyridine-containing ligand complexed with a metal that will phosphoresce upon exposure to UV radiation. The ligand may be chosen from a substituted or unsubstituted bidentate pyridine compound, a substituted or unsubstituted tridentate pyridine compound, or combinations of two or more thereof.

In one embodiment, the ligand comprises a terpyridine compound of the Formula (I): 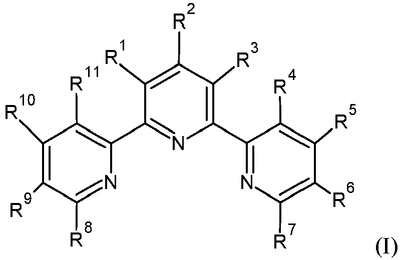 where R¹-R¹¹ are independently chosen from an alkyl, a substituted alkyl, an aryl, a substituted aryl, an inert functional group, an alkoxysilyl functional group, and an alcohol functional group, optionally any two of R¹-R¹¹ vicinal to one another, R¹/R¹¹ and/or R³/R⁴ taken together may form a ring being a substituted or unsubstituted, saturated, or unsaturated cyclic structure, with the proviso that the compound comprises an alkoxysilyl functional group, an alcohol functional group, or a combination of two or more thereof.

In embodiments, the pyridine-containing ligand is a substituted pyridine complex comprising at least one alkoxysilyl functional group, at least one alcohol function group, or a combination of two or more thereof as an "R" substituent on the pyridine compound. In one embodiment, the remaining groups for R¹-R¹¹ may be independently chosen from hydrogen, a C1-C18 alkyl, a C1-C18 substituted alkyl, a C6-C18 aryl, and a substituted C6-C18 aryl.

The alkoxysilyl functional group and/or the alcohol functional group are employed to attach the pyridine-containing ligand to the siloxane network. The alcohol functional group is chosen from a compound of the formula -O-(CH²)ₘ-OH where m is 1-20.

The alkoxysilyl functional group is chosen from a functional group of the formula: -(CH²)ₙ-Si(OR¹²)₃, where R¹² is CₚH₂ₚ₊₁, p is 1-10, and n is 1-20. In another embodiment, the alkoxysilyl functional group is chosen from a functional group of the formula: -O-(CH₂)_{q}-A¹-C(O)-A²-(CH₂)ᵣ-Si(OR¹³)₃, where A¹ and A² are independently chosen from an oxygen atom or NH, q and r are independently 1-20, and R¹³ is CₚH₂ₚ₊₁ where p is 1-10. In one embodiment, A¹ and A² are each chosen from NH. In one embodiment, A¹ is O, and A² is NH. In one embodiment, A¹ and A² are each O.

The alkoxysilyl and/or alcohol functional group can be provided at any of the R¹-R¹¹ positions on the terpyridine compound. In one embodiment, the terpyridine compound comprises an alkoxysilyl or alcohol functional group at the R² position.

The ligands are ligands of the Formulas (II)-(V): 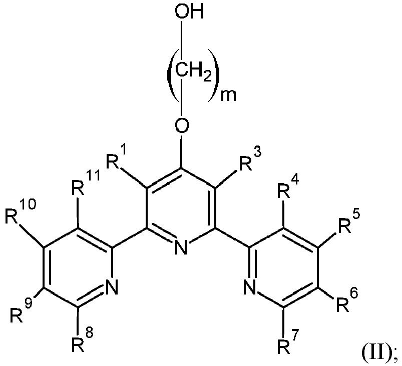 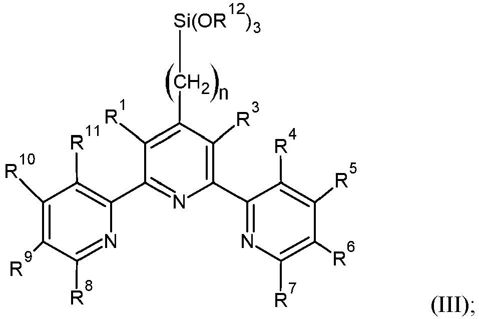 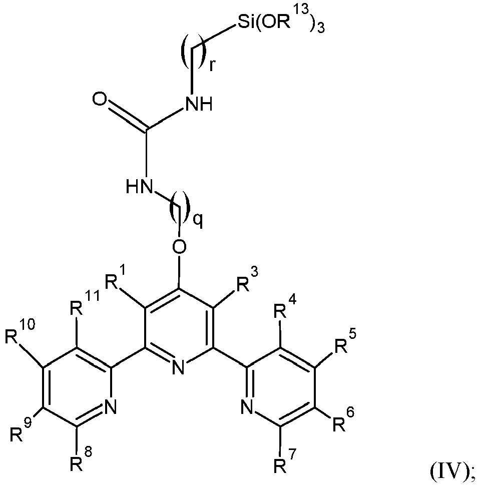 and/or 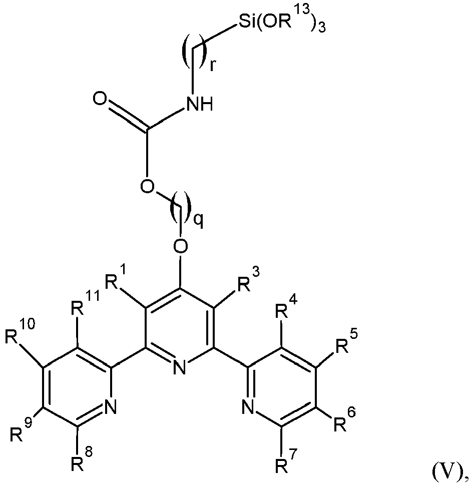 where R¹ and R³-R¹³ can be as described above.

The functionalized terpyridines comprising an alkoxysilyl and/or alcohol functional group can be synthesized by any suitable method for attaching such groups to the cyclic structure of a pyridine group. In one embodiment, an alcohol functional group or an alkoxysilyl-containing functional group may be attached to a pyridine of the ligand by the condensation reaction of a diol or amino diol with a halogen substituted pyridine-containing compound (e.g., terpyridine). In one embodiment, an alkoxysilyl group can be attached to a pyridine unit by the hydrosilylation reaction between a silane hydride or siloxane hydride with an alkenyl functional pyridine-containing compound.

In embodiments, the pyridine-containing ligand may be a substituted or unsubstituted bidentate pyridine compound. Examples of suitable bidentate pyridine compounds include, 2,2' bipyridine, and 3, 3 by pyridine. It will be appreciated that the bidentate pyridine compound may be substituted as described with respect to the tridentate pyridine-containing ligands. That is, the groups attached to the pyridine rings may be selected from the groups described with respect to R¹-R¹¹ for the terpyridine ligands. In embodiments, the bidentate pyridine compounds may be a substituted bidentate pyridine ligand comprising an alkoxysilyl functional group, an alcohol functional group, or a combination of two or more thereof.

While the above complexes have been described with respect to pyridine-containing compounds as the ligand, it will be appreciated that one or more nitrogen atoms could be replaced with a heteroatom such as O, P or a combination thereof.

The pyridine-based ligands complex or coordinate a metal ion or metal salt. The metal may be selected as desired for a particular purpose or intended application. In one embodiment, the ligand may be complexed with a lanthanide series metal, a salt thereof, or a combination of two or more thereof. Suitable metals include, yttrium, lanthanum, praseodymium, promethium, europium, erbium, cerium, neodymium, samarium, terbium, dysprosium, gadolinium, holmium, thulium, ytterbium, lutetium, or combinations of two or more thereof. The metal may be provided as a metal salt or complex with a selected ion or complexing agent. The ion for forming the salt is not particularly limited and may be chosen as desired for a particular purpose or intended application. Examples of suitable ions for forming the salts include, but are not limited to, nitrates, nitrites, sulfates, sulfonates, sulfites, phosphates, phosphites, organic sulfates, organic sulfonates, and halogens (chloride, fluoride, iodide). In one embodiment, the salt comprises nitrates. An example of a suitable sulfonate is trfilate (trifluoromethane sulfonate). When subjected to UV irradiation, the ligand may show a characteristic phosphorescence based on the metal or metals employed. The ligand can be tuned to provide a selected color based on the concentration of the metal atoms or by complexing a plurality of metal ions or metal salts and by controlling the concentration of the respective metals complexed by the functionalized particles.

In one embodiment, the luminophoric material comprises a fluorescent dye and/or pigment. Exemplary dyes may be organic or inorganic, and may include, coumarin dyes such as coumarin 460 (blue), coumarin 6 (green), benzocoumarin, or Nile red; hydrocarbon and substituted hydrocarbon dyes; polycyclic aromatic hydrocarbon dyes; scintillation dyes such as oxazole or oxadiazole dyes; aryl- or heteroaryl-substituted poly (C2-8) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; benzoxanthene dyes; naphthalimide dyes; lactone dyes; fluorophores such as anti-stokes shift dyes; luminescent dyes such as 7-amino-4-methylcoumarin; 3-(2'- benzothiazolyl)-7-diethylaminocoumarin; 2-(4-biphenylyl)-5-(4-t-butylphenyl)- 1 ,3,4- oxadiazole; 2,5-bis-(4-biphenylyl)-oxazole; 2,2'-dimethyl-p-quaterphenyl; 2,2-dimethyl-p--29- terphenyl; 3,5,3"",5""-tetra-t-butyl-p-quinquephenyl; 2,5-diphenylfuran; 2,5- diphenyloxazole; 4,4'-diphenylstilbene; 4-dicyanomethylene-2-methyl-6-(p- dimethylaminostyryl)-4H-pyran; 1,1'-diethyl-2,2'-carbocyanine iodide; 3,3'-diethyl- 4,4',5,5'-dibenzothiatricarbocyanine iodide; 7-dimethylamino-1-methyl-4-methoxy-8- azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p- phenylen-bis(5-phenyloxazole); rhodamine 700; rhodamine 800; pyrene, chrysene, rubrene, coronene, or the like; fluorescein and its derivatives; phenoxazines, benzophenoxazines, napthalimides; or a combination of two or more of the foregoing dyes.

The coating composition is chosen, in one embodiment, from a material suitable for providing a topcoat. The coating composition is not particularly limited, and may be any appropriate topcoat, including, but not limited to, a silicone topcoat, an acrylic topcoat, or a vinyl varnish topcoat. One example of silicone coatings that provide a hardcoat includes siloxanol resin/colloidal silica dispersions. Siloxanol resin/colloidal silica disperions are described, for example, in U.S. Patent No. 8,637,157, the entire disclosures of which are each incorporated herein by reference in its entirety. Examples of suitable silicone coating materials include, but are not limited to, SilFORT™ AS4700, SilFORT™ PHC 587, SilFORT™ AS4000, SilFORT™ SHC2050, SILVUE™ 121, SILVUE™ 339, SILVUE™ MP100 and HI-GARD™ 1080.

In one embodiment, the coating system employs a primer disposed between the substrate to be coated and the topcoat or coating layer. The primer may promote adhesion of the coating to the substrate. The primer material is not particularly limited, and may be chosen from any suitable primer material. In one embodiment, the primer is chosen from homo and copolymers of alkyl acrylates, polyurethanes, polycarbonates, urethane hexaacrylates, pentaerythritol triacrylates, polyvinylpyrrolidone, polyvinylbutyrals, poly(ethylene terephthalate), poly(butylene terephthalate), or a combination of two or more thereof. In one embodiment, the primer may be polymethylmethacrylate.

The luminophoric material can be added to the coating composition, the primer material, or both the coating and the primer material. In one embodiment, the coating is provided as a primerless system, and the luminophoric material is incorporated directly into the coating material. In one embodiment, the coating system comprises a primer coating layer and a topcoat coating layer, and the luminophoric material is provided as a component in the primer layer, the topcoat layer, or both the primer and the topcoat layer. In one embodiment, the luminophoric material is a pyridine-based metal complex, and the luminophoric material is added to the primer material.

The luminophoric material can be added to the coating composition or primer material directly or can be dissolved in a solvent or other suitable carrier. In one embodiment, where the luminophoric material is a pyridine-based complex, the complex can be formed by providing the pyridine-based compound, dissolving the compound in a solvent, and then adding a metal material or suitable metal salt to form the complex. The solvent may be a polar and/or non-polar solvent such as methanol, ethanol, n-butanol, t-butanol, n-octanol, n-decanol, 1-methoxy-2-propanol, isopropyl alcohol, ethylene glycol, hexane, decane, isooctane, benzene, toluene, the xylenes, tetrahydrofuran, dioxane, diethyl ether, dibutyl ether, bis(2-methoxyethyl)ether, 1,2-dimethoxyethane, acetonitrile, benzonitrile, aniline, phenylenediamine, pphenylenediamine, chloroform, acetone, methylethyl ketone, dimethylformamide (DMF), dimethyl sulfoxide (DMSO), *N*-methylpyrrolidinone (NMP), and propylene carbonate. Then a metal ion or metal salt may be added into the solution comprising of solvent and ligand. The metal ion or salt may be any appropriate metal ion or salt as discussed above. The metal ion or salt may react with the ligand to form a metal complex in the solvent to form a complex solution. In one embodiment, the luminophoric material may be added to the solvent in an amount ranging from 0.1 wt.% to 1.0 wt.%; from 0.2 wt.% to 0.8 wt.%; even from 0.3 to 0.6 wt.%. This composition can then be added to the primer and/or coating composition as desired.

The luminophoric material can be added to the primer and/or coating on any concentration as desired for a particular purpose or intended application. Generally, the luminophoric material should be added in an amount that will not affect or impair the physical properties of the coating including, for example, the optical properties of the coating system. In one embodiment, the luminophoric material is provided in an amount of from 0.05 wt. % to 5 wt. %, from 0.1 wt. % to 2.5 wt. %, even from 0.1 wt. % to 1 wt. % based on the dry weight of the film after curing of the coating.

The coating compositions may include other materials or additives to provide the coating with desired properties for a particular purpose or intended application. For example, the coating composition can comprise a catalyst to reduce the cure time of the coating, surfactants, and antioxidants.

The cure catalyst is not particularly limited and any suitable catalyst for curing the coating composition can be used. In one embodiment, the catalyst is a thermal cure catalyst tetrabutylammonium carboxylate of the formula: [(C₄H₉)₄N]⁺[OC(O)-R]⁻, wherein R is selected from the group consisting of hydrogen, alkyl groups containing about 1 to about 8 carbon atoms, and aromatic groups containing about 6 to 20 carbon atoms. In embodiments, R is a group containing about 1 to 4 carbon atoms, such as methyl, ethyl, propyl, butyl, and isobutyl. Exemplary catalysts are tetra-n-butylammonium acetate (TBAA), tetra-n-butylammonium formate, tetra-n-butylammonium benzoate, tetra-n-butylammonium-2-ethylhexanoate, tetra-n-butylammonium-p-ethylbenzoate, and tetra-n-butylammonium propionate. Particularly suitable catalysts are tetra-n-butylammonium acetate and tetra-n-butylammonium formate.

The composition of the invention can also include surfactants as leveling agents. Examples of suitable surfactants include, fluorinated surfactants such as FLUORAD™ from 3M Company of St. Paul, Minn., and silicone poly ethers under the designation Silwet® and CoatOSil® available from Momentive Performance Materials, Inc. of Albany, N.Y. and BYK available from BYK Chemie USA of Wallingford, Conn

The composition can also include UV absorbers. The UV absorbers can be chosen from organic UV absorbers, inorganic UV absorbers, or a combination thereof. Examples of suitable organic UV absorbers, include but are not limited to, those capable of co-condensing with silanes. Such UV absorbers are disclosed in U.S. Patent Nos. 4,863,520, 4,374,674, 4,680,232, and 5,391,795 which are herein each incorporated by reference in its entirety. Specific examples include 4-[gamma-(trimethoxysilyl) propoxyl]-2-hydroxy benzophenone and 4-[gamma-(triethoxysilyl) propoxyl]-2-hydroxy benzophenone and 4,6-dibenzoyl-2-(3-triethoxysilylpropyl) resorcinol. When the preferred UV absorbers that are capable of co-condensing with silanes are used, it is important that the UV absorber co-condenses with other reacting species by thoroughly mixing the coating composition before applying it to a substrate. Co-condensing the UV absorber prevents coating performance loss caused by the leaching of free UV absorbers to the environment during weathering.

Examples of suitable inorganic UV absorbers include metal oxide such cerium oxide, titanium oxide, zinc oxide, zirconium oxide, or combinations of two or more thereof.

The composition can also include antioxidants such as hindered phenols (e.g. IRGANOX® 1010 from Ciba Specialty Chemicals), dyes (e.g. methylene green, and methylene blue), fillers and other additives.

The coating can be applied to any suitable substrate including, organic polymeric materials such as acrylic polymers, e.g., poly(methylmethacrylate), polyamides, polyimides, acrylonitrile-styrene copolymer, styrene-acrylonitrile-butadiene terpolymers, polyvinyl chloride, polyethylene, polycarbonates, copolycarbonates, high-heat polycarbonates, and any other suitable material.

The primer may be coated on a substrate by flow coat, dip coat, spin coat or any other methods known to a person skilled in the field, it is allowed to dry by removal of any solvents, for example by evaporation, thereby leaving a dry coating. The primer may subsequently be cured. Additionally, a topcoat (e.g., a hardcoat layer) may be applied on top of the dried primer layer by flow coat, dip coat, spin coat or any other methods known to a person skilled in the field. Optionally, a topcoat layer may be directly applied to the substrate without a primer layer.

The following examples illustrate embodiments of materials in accordance with the disclosed technology. The examples are intended to illustrate aspects and embodiments of the disclosed technology, and are not intended to limit the claims or disclosure to such specific embodiments.

### EXAMPLES

### Example 1: Synthesis of alcohol functionalized terpyridine

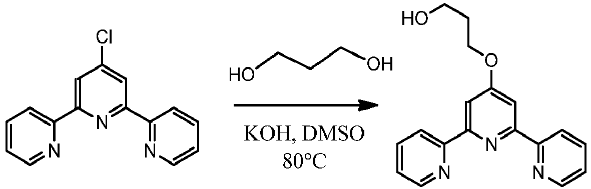

4-Chloro-2,2':6',2"-terpyridine (1.5 grams, 5.62 mmol) was taken along with 1,3 propanediol (4.89 grams, 61.82 mmol) and powdered potassium hydroxide (0.63 grams, 11.24 mmol) in dry dimethylsulfoxide (15 ml), heated to 70 °C, and kept at that temperature for 24 hours. After 24 hours, the reaction mixture was poured into water. The solid obtained was filtered and dried. NMR confirmed product formation along with the presence of 4-Chloro-2,2':6',2"-terpyridine.

### Example 2: Synthesis of amino functionalized terpyridine

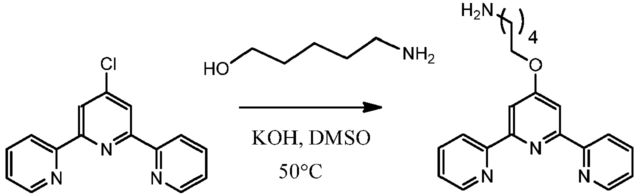

5-amino-1-pentanol (1.96 g, 19.0 mmol) was taken along with potassium hydroxide (0.61 g, 10.89 mmol) and stirred at 50 °C for 30 minutes in dry dimethylsulfoxide. To this, 4-Chloro-2,2':6',2"-terpyridine (1.0 g, 3.74 mmol) was added, and the reaction was conducted at 50 °C for 18 hours. After 18 hours, the reaction mixture was poured into ice cold water leading to the formation of a precipitate that was filtered and washed with water and dried. NMR confirmed the product formation.

### Example 3: Synthesis of trimethoxy functionalized terpyridine

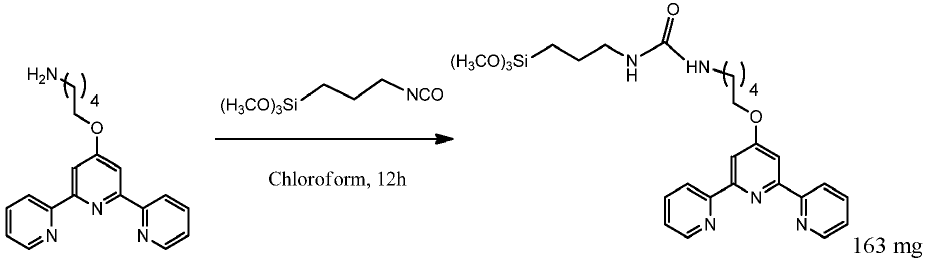

163 mg (0.487 mmol) of Amino functionalized terpyridine from Example 2 was taken along with 3-(Trimethoxysilyl)propyl isocyanate (100 mg, 0.487 mmol) in chloroform (10 ml) and stirred at room temperature for 12 hours. After 12 hours of stirring, the solvent was removed and 1H NMR confirmed product formation.

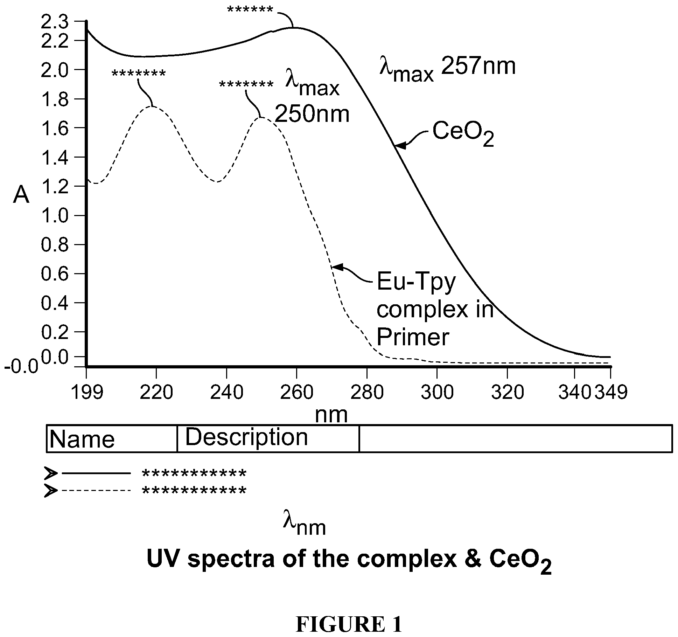

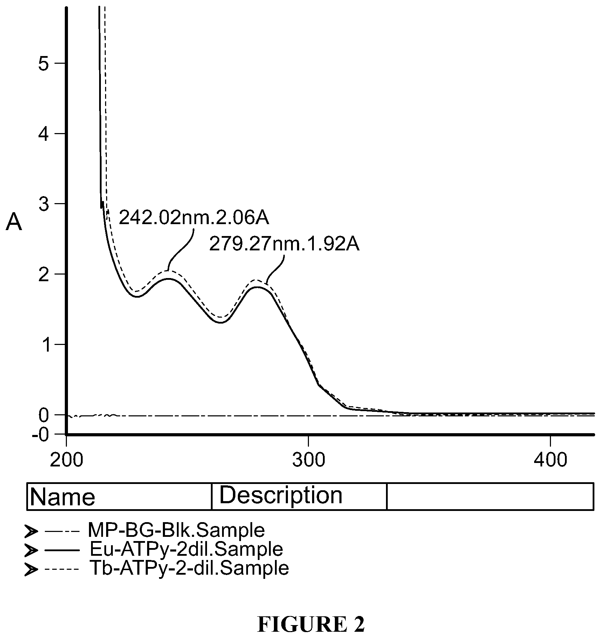

Figure 1 shows a graph comparing the UV spectra of the Eu-Tpy complex with the terpyridine ligand of Example 1 in primer versus Ceria (CeO₂). The maximum wavelength of the Eu-Tpy complex in primer is 250nm versus a maximum wavelength of the Ceria of 257 nm. Figure 2 shows a graph comparing the UV spectra of an Eu-Tpy complex with the terpyridine ligand of Example 1 versus a Tb-Tpy complex with the terpyridine ligand of Example 1. Both complexes show similar absorbance at 242.02 nm and 279.27 nm.

### Example 5: Preparation of primer formulations containing Formula (I) complexed with Europium

The terpyridine compound of Example 1 was complexed with Europium by dissolving the terpyridine compound (5 mg) in 1-methoxy-2-propanol (1 gram) and adding Eu(III)NO₃.5H₂O (2-3 mg) to form the Eu(III) complex. Then, PMMA solution (10 grams) was added to the prepared complex solution. The resulting primer solution was then flow coated on to the polycarbonate plate and then coated with silicone topcoat formulations (SilFORT™ AS4700 from Momentive Performance Materials).

### Example 6: Preparation of primer formulations containing Formula (II) complexed with Europium

The terpyridine compound of Example 2 was complexed with Europium by dissolving the terpyridine compound (5 mg) in 1-methoxy-2-propanol (1 gram) and adding Eu(III)NO₃.5H₂O (2-3 mg) to form the Eu(III) complex. Then, PMMA solution (10 grams) was added to the prepared complex solution. The resulting primer solution was then flow coated on to the polycarbonate plate and then coated with silicone topcoat formulations (SilFORT™ AS4700 from Momentive Performance Materials).

### Example 7: Preparation of primer formulations containing coumarin 6

A prepared complex solution was prepared by dissolving coumarin 6 (5 mg) in 1-methoxy-2-propanol (1 gram). Then, PMMA solution (10 grams) was added to the prepared complex solution. The resulting primer solution was then flow coated on to the polycarbonate plate and then coated with silicone topcoat formulations (SilFORT™ AS4700 from Momentive Performance Materials).

### Example 8: Comparison of coating and adhesion properties

Coated polycarbonate sheet samples were tested for coating and adhesion properties. In one test, the coated polycarbonate sheets were cross-hatch adhesion tested. Long term adhesion was tested by suspending the panels in 65 °C water and testing the adhesion at different intervals.

Additionally, the optical properties (i.e., % transmission and haze) of the samples were measured using a BYK Hazegard instrument. The coated polycarbonate sheets were exposed to long UV radiation (300-400nm) and the phospherescnece was determined upon illuminating with UV light at 254 nm. The results of all tests are shown in Table 1 below:

**Table 1**

| **Entry** | **Sample** | **%T** | **Haze** | **Initial Adhesion** |
|---|---|---|---|---|
| 1 | Eu Complex of the ligand of Example 1 in PMMA | 89.08 | 0.74 | 5B |
| 2 | Tb complex of the ligand of Example 3 in PMMA | 89.4 | 0.55 | 5B |
| 3 | Coumarin 6 in PMMA | 87.6 | 2.52 | 5B |
| 4 | Coumarin 6 in PHC 587 | 87.7 | 4.22 | 5B |
| 5 | Coumarin 6 in SHP470 | 87.8 | 1.45 | 5B |

While the above description contains many specifics, these specifics should not be construed as limitations on the scope of the invention, but merely as exemplifications of preferred embodiments thereof.

## Claims

1. A coating composition comprising a luminophoric material, wherein the luminophoric material is a pyridine-containing ligand chosen from a terpyridine derived from a compound of the formula: 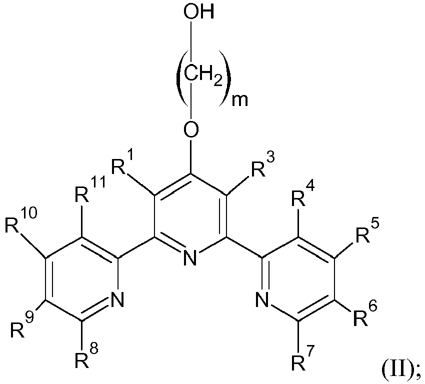 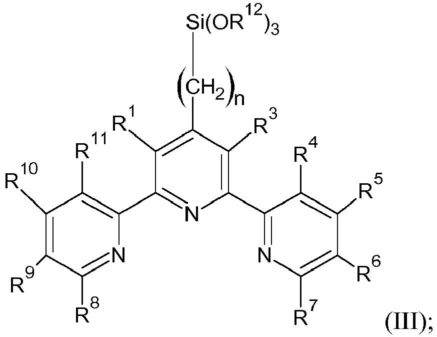 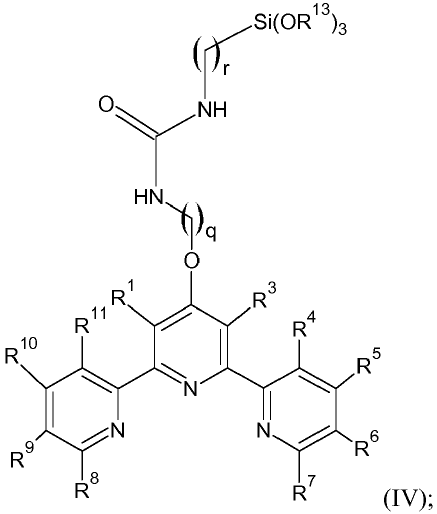 and/or 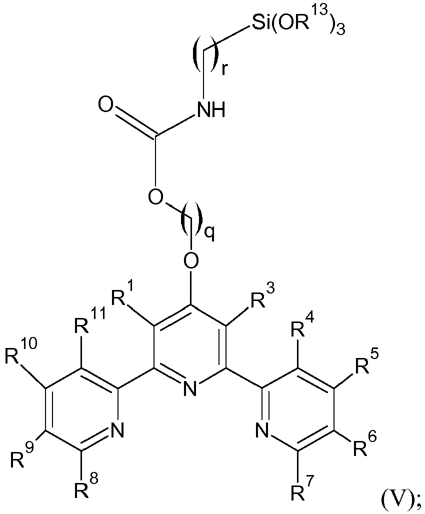 and
wherein R¹-R¹¹ are independently chosen from an alkyl, a substituted alkyl, an aryl, a substituted aryl, an inert functional group, an alkoxysilyl functional group, and an alcohol functional group, optionally any two of R¹-R¹¹ vicinal to one another, R¹/R¹¹ and/or R³/R⁴ taken together may form a ring being a substituted or unsubstituted, saturated, or unsaturated cyclic structure, with the proviso that the compound comprises an alkoxysilyl functional group, an alcohol functional group, or a combination of two or more thereof, and wherein the alcohol functional group of the compound of the formula (II) is chosen from a compound of the formula -O-(CH²)ₘ-OH where m is 1-20,
the alkoxysilyl functional group of the compound of the formula (III) is chosen from a functional group of the formula: -(CH²)ₙ-Si(OR¹²)₃, where R¹² is CₚH₂ₚ₊₁, p is 1-10, and n is 1-20,
the alkoxysilyl functional group of the compound of the general formula (IV) is chosen from a functional group of the formula: -O-(CH₂)_{q}-NH-C(O)-NH-(CH₂)ᵣ-Si(OR¹³)₃, wherein
q and r are independently 1-20, and R¹³ is CₚH₂ₚ₊₁ where p is 1-10,
and the alkoxysilyl functional group of the compound of the general formula (V) is chosen from a functional group of the formula: -O-(CH₂)_{q}-O-C(O)-NH-(CH₂)ᵣ-Si(OR¹³)₃, where A¹ and A² are independently chosen from an oxygen atom or NH, q and r are independently 1-20, and R¹³ is CₚH₂ₚ₊₁ where p is 1-10.

2. The coating composition of any of claims 1, wherein the terpyridine is complexed with a metal or metal salt comprising a metal chosen from europium, erbium, cerium, neodymium, samarium, terbium, dysprosium, gadolinium, holmium, thulium, ytterbium, lutetium, or a combination of two or more thereof.

3. The coating composition of claim 2, wherein the metal salt comprises europium nitrate.

4. The coating composition of any of claims 1-3, wherein the luminophoric material is present in an amount of from 0.05 wt. % to 5 wt. % based on the dry weight of a film after curing the composition.

5. A coating system comprising a topcoat material and a primer material, wherein at least one of the topcoat material or primer material comprises the composition of any one of claims 1-4, and wherein (i) the topcoat material comprises the luminophoric material; (ii) the primer material comprises the luminophoric material; or (iii) both the topcoat material and the primer material comprise the luminophoric material.

6. An article comprising a coating formed from a coating composition of any of claims 1-4 or coating systems of claim 5 disposed on at least a portion of a surface of the article, the coating comprising a luminophoric material.

7. The article of claim 6, wherein the article comprises a substrate material chosen from chosen from an acrylic polymer, a polyamide, a polyimide, an acrylonitrile-styrene copolymer, a polyvinyl chloride, a polycarbonate, a copolycarbonate, or a combination of two or more thereof.

8. A method of making a coating composition comprising adding a metal complex to a topcoat composition, a primer material, or both, wherein the metal complex is a terpyridine compound of the formulae: 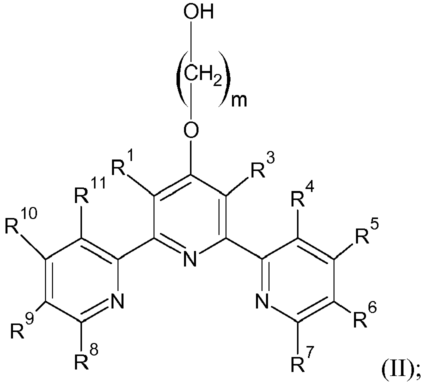 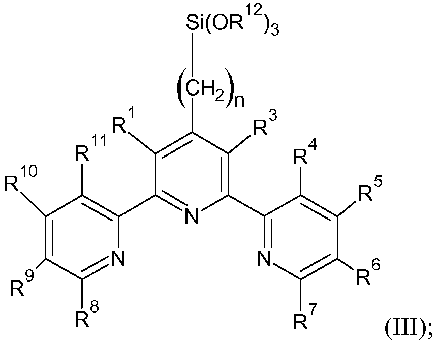 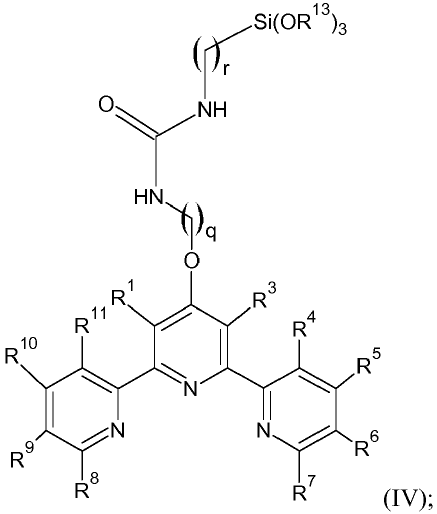 and/or 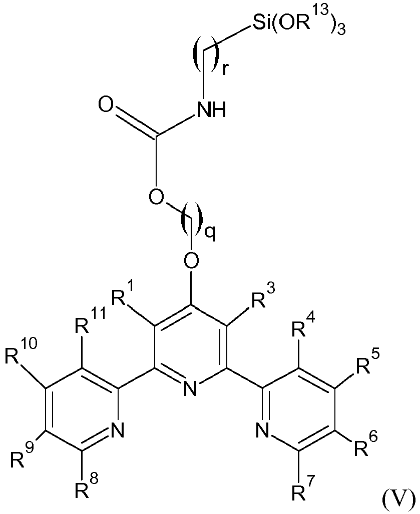
where R¹-R¹¹ are independently chosen from an alkyl, a substituted alkyl, an aryl, a substituted aryl, an inert functional group, an alkoxysilyl functional group, and an alcohol functional group, optionally any two of R¹-R¹¹ vicinal to one another, R¹/R¹¹ and/or R³/R⁴ taken together may form a ring being a substituted or unsubstituted, saturated, or unsaturated cyclic structure, with the proviso that the compound comprises an alkoxysilyl functional group, an alcohol functional group, or a combination of two or more thereof, and wherein the alcohol functional group of the compound of the formula (II) is chosen from a compound of the formula -O-(CH²)ₘ-OH where m is 1-20,
the alkoxysilyl functional group of the compound of the formula (III) is chosen from a functional group of the formula: -(CH²)ₙ-Si(OR¹²)₃, where R¹² is CₚH₂ₚ₊₁, p is 1-10, and n is 1-20,
the alkoxysilyl functional group of the compound of the general formula (IV) is chosen from a functional group of the formula: -O-(CH₂)_{q}-NH-C(O)-NH-(CH₂)ᵣ-Si(OR¹³)₃, wherein
q and r are independently 1-20, and R¹³ is CₚH₂ₚ₊₁ where p is 1-10,
and the alkoxysilyl functional group of the compound of the general formula (V) is chosen from a functional group of the formula: -O-(CH₂)_{q}-O-C(O)-NH-(CH₂)ᵣ-Si(OR¹³)₃, where A¹ and A² are independently chosen from an oxygen atom or NH, q and r are independently 1-20, and R¹³ is CₚH₂ₚ₊₁ where p is 1-10,
wherein the terpyridine is complexed with a metal or metal salt.

9. The method of claim 8, wherein the metal or metal salt comprises a metal chosen from europium, erbium, cerium, neodymium, samarium, terbium, dysprosium, gadolinium, holmium, thulium, ytterbium, lutetium, or a combination of two or more thereof.

## Patentansprüche

1. Eine Beschichtungszusammensetzung, die ein luminophores Material umfasst, wobei das luminophore Material ein Pyridin-haltiger Ligand ist, der aus einem Terpyridin ausgewählt ist, das von einer Verbindung der Formel 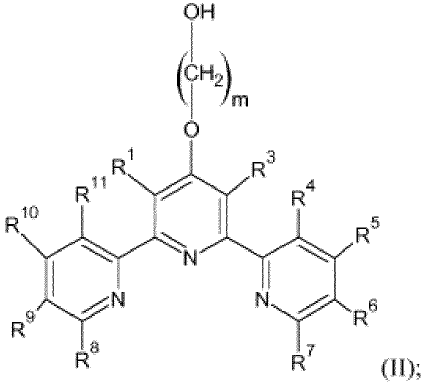 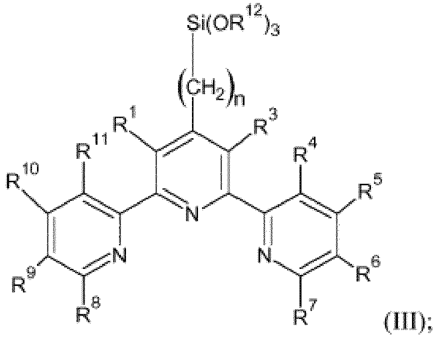 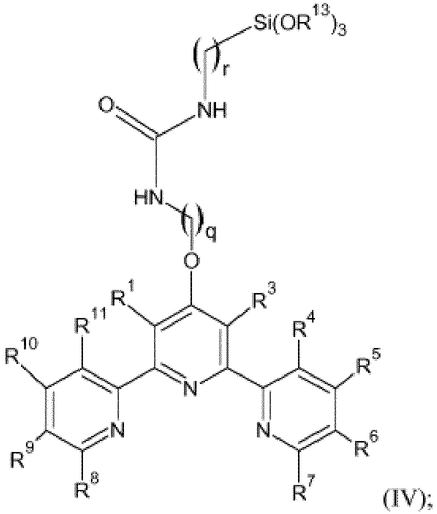 und/oder 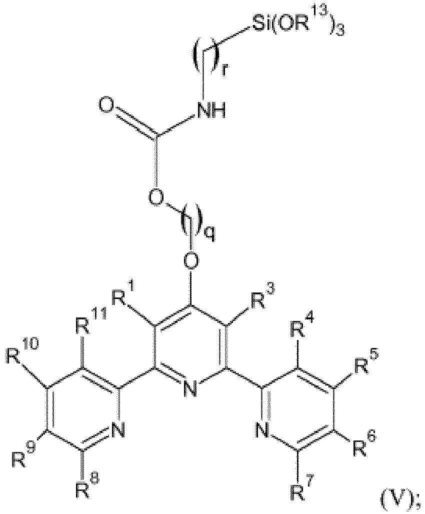 abgeleitet ist; und
wobei R¹-R¹¹ in unabhängiger Weise aus einer Alkyl-, einer substituierten Alkyl-, einer Aryl-, einer substituierten Aryl-, einer inerten funktionellen Gruppe, einer Alkoxysilylfunktionellen Gruppe, und einer Alkohol-funktionellen Gruppe ausgewählt sind, wahlweise zwei beliebige von R¹-R¹¹, die benachbart zueinander liegen, R¹/R¹¹ und/oder R³/R⁴ zusammengenommen einen Ring bilden können, der eine substituierte oder unsubstituierte, gesättigte oder ungesättigte cyclische Struktur darstellt, mit der Maßgabe, dass die Verbindung eine Alkoxysilyl-funktionelle Gruppe, eine Alkohol-funktionelle Gruppe, oder eine Kombination von zwei oder mehr davon umfasst, und wobei die Alkohol-funktionelle Gruppe der Verbindung der Formel (II) aus einer Verbindung der Formel -O-(CH₂)ₘ-OH, wobei m 1-20 ist, ausgewählt ist,
die Alkoxysilyl-funktionelle Gruppe der Verbindung der Formel (III) aus einer funktionellen Gruppe der Formel: -(CH₂)ₙ-Si(OR¹²)₃, wobei R¹² CₚH₂ₚ₊₁, p 1-10, und n 1-20 ist, ausgewählt ist,
die Alkoxysilyl-funktionelle Gruppe der Verbindung der allgemeinen Formel (IV) aus einer funktionellen Gruppe der Formel: -O-(CH₂)_{q}-NH-C(O)-NH-(CH₂)ᵣ-Si(OR¹³)₃ ausgewählt ist, wobei q und r in unabhängiger Weise 1-20 sind, und R¹³ CₚH₂ₚ₊₁ ist, wobei p 1-10 ist,
und die Alkoxysilyl-funktionelle Gruppe der Verbindung der allgemeinen Formel (V) aus einer funktionellen Gruppe der Formel: -O-(CH₂)_{q}-O-C(O)-NH-(CH₂)ᵣ-Si(OR¹³)₃ ausgewählt ist, wobei A¹ und A² in unabhängiger Weise aus einem Sauerstoffatom oder NH ausgewählt sind, q und r in unabhängiger Weise 1-20 sind, und R¹³ CₚH₂ₚ₊₁, wobei p 1-10 ist, ist.

2. Die Beschichtungszusammensetzung gemäß Anspruch 1, wobei das Terpyridin mit einem Metall oder Metallsalz komplexiert ist, das ein Metall umfasst, das aus Europium, Erbium, Cer, Neodym, Samarium, Terbium, Dysprosium, Gadolinium, Holmium, Thulium, Ytterbium, Lutetium, oder einer Kombination von zwei oder mehr davon ausgewählt ist.

3. Die Beschichtungszusammensetzung gemäß Anspruch 2, wobei das Metallsalz Europiumnitrat umfasst.

4. Die Beschichtungszusammensetzung gemäß einem der Ansprüche 1-3, wobei das luminophore Material in einer Menge von 0,05 Gewichts-% bis 5 Gewichts-% auf der Grundlage des Trockengewichts des Films nach der Härtung der Zusammensetzung vorliegt.

5. Ein Beschichtungssystem, das ein Deckschichtmaterial und ein Grundierungsmaterial umfasst, wobei mindestens eines von dem Deckschichtmaterial oder dem Grundierungsmaterial die Zusammensetzung eines beliebigen der Ansprüche 1-4 umfasst, und wobei (i) das Deckschichtmaterial das luminophore Material umfasst; (ii) das Grundierungsmaterial das luminophore Material umfasst; oder (iii) sowohl das Deckschichtmaterial als auch das Grundierungsmaterial das luminophore Material umfassen.

6. Ein Gegenstand, der eine Beschichtung umfasst, die aus einer Beschichtungszusammensetzung eines beliebigen der Ansprüche 1-4 oder Beschichtungssystemen gemäß Anspruch 5, die auf mindestens einem Teil der Oberfläche eines Gegenstandes angeordnet wird, gebildet wird, wobei die Beschichtung ein luminophores Material umfasst.

7. Der Gegenstand gemäß Anspruch 6, wobei der Gegenstand ein Substratmaterial umfasst, das aus einem Acrylpolymer, einem Polyamid, einem Polyimid, einem Acrylnitril-Styrol-Copolymer, einem Polyvinylchlorid, einem Polycarbonat, einem Copolycarbonat, oder einer Kombination von zwei oder mehr davon ausgewählt ist.

8. Ein Verfahren zur Herstellung einer Beschichtungszusammensetzung, die das Hinzugeben eines Metallkompexes zu einer Deckschichtzusammensetzung, einem Grundierungsmaterial, oder beiden umfasst, wobei es sich bei dem Metallkomplex um eine Terpyridinverbindung der Formeln 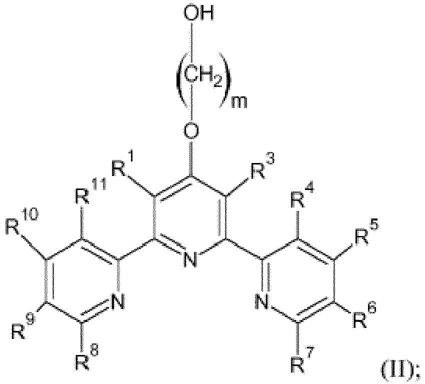 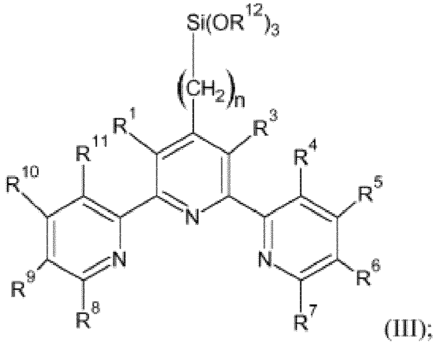 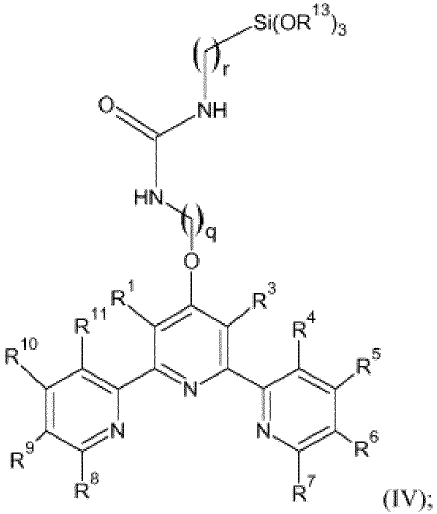 und/oder 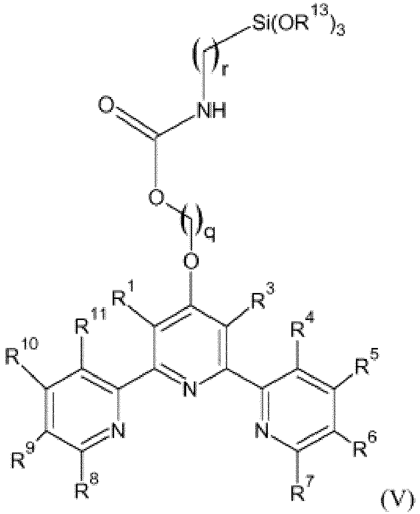 handelt,
wobei R¹-R¹¹ in unabhängiger Weise aus einer Alkyl-, einer substituierten Alkyl-, einer Aryl-, einer substituierten Aryl-, einer inerten funktionellen Gruppe, einer Alkoxysilylfunktionellen Gruppe, und einer Alkohol-funktionellen Gruppe ausgewählt sind, wahlweise zwei beliebige von R¹-R¹¹, die benachbart zueinander liegen, R¹/R¹¹ und/oder R³/R⁴ zusammengenommen einen Ring bilden können, der eine substituierte oder unsubstituierte, gesättigte oder ungesättigte cyclische Struktur darstellt, mit der Maßgabe, dass die Verbindung eine Alkoxysilyl-funktionelle Gruppe, eine Alkohol-funktionelle Gruppe, oder eine Kombination von zwei oder mehr davon umfasst, und wobei die Alkohol-funktionelle Gruppe der Verbindung der Formel (II) aus einer Verbindung der Formel -O-(CH₂)ₘ-OH, wobei m 1-20 ist, ausgewählt ist,
die Alkoxysilyl-funktionelle Gruppe der Verbindung der Formel (III) aus einer funktionellen Gruppe der Formel: -(CH₂)ₙ-Si(OR¹²)₃, wobei R¹² CₚH₂ₚ₊₁, p 1-10, und n 1-20 ist, ausgewählt ist,
die Alkoxysilyl-funktionelle Gruppe der Verbindung der allgemeinen Formel (IV) aus einer funktionellen Gruppe der Formel: -O-(CH₂)_{q}-NH-C(O)-NH-(CH₂)ᵣ-Si(OR¹³)₃ ausgewählt ist, wobei q und r in unabhängiger Weise 1-20 sind, und R¹³ CₚH₂ₚ₊₁ ist, wobei p 1-10 ist, und die Alkoxysilyl-funktionelle Gruppe der Verbindung der allgemeinen Formel (V) aus einer funktionellen Gruppe der Formel: -O-(CH₂)_{q}-O-C(O)-NH-(CH₂)ᵣ-Si(OR¹³)₃ ausgewählt ist, wobei A¹ und A² in unabhängiger Weise aus einem Sauerstoffatom oder NH ausgewählt sind, q und r in unabhängiger Weise 1-20 sind, und R¹³ CₚH₂ₚ₊₁, wobei p 1-10 ist, ist,
wobei das Terpyridin mit einem Metall oder Metallsalz komplexiert ist.

9. Das Verfahren gemäß Anspruch 8, wobei das Metall oder Metallsalz ein Metall umfasst, das aus Europium, Erbium, Cer, Neodym, Samarium, Terbium, Dysprosium, Gadolinium, Holmium, Thulium, Ytterbium, Lutetium, oder einer Kombination von zwei oder mehr davon ausgewählt ist.

## Revendications

1. Composition de revêtement comprenant un matériau luminophore, dans laquelle le matériau luminophore est un ligand contenant de la pyridine choisi parmi une terpyridine dérivée d'un composé de formule : 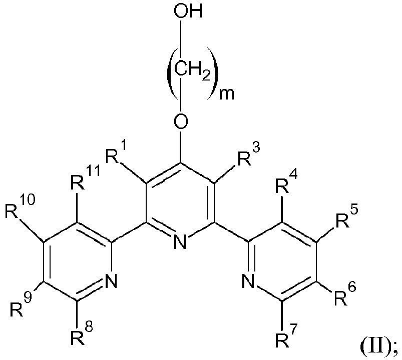 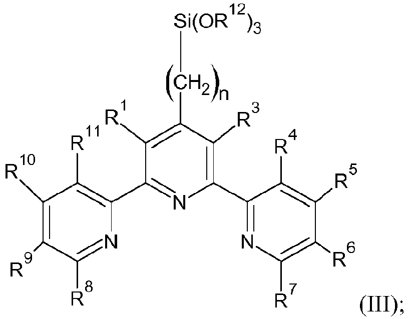 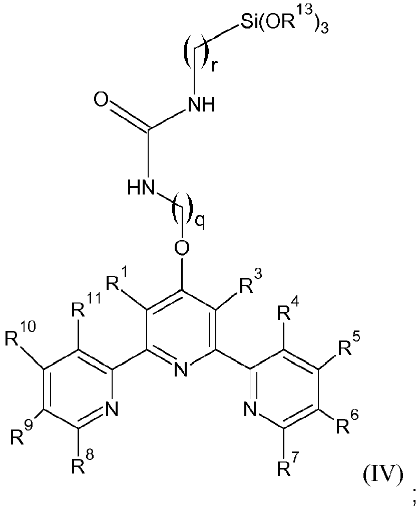 et/ou 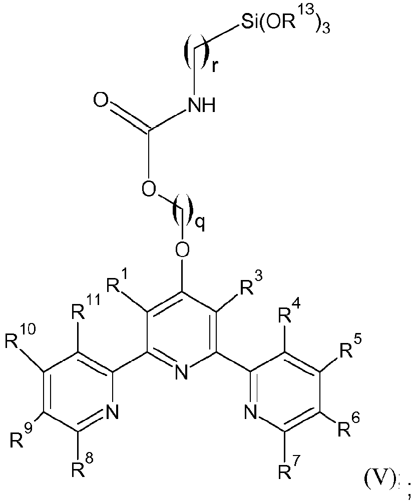 et
où R¹ à R¹¹ sont indépendamment choisis parmi un alkyle, un alkyle substitué, un aryle, un aryle substitué, un groupe fonctionnel inerte, un groupe fonctionnel alcoxysilyle et un groupe fonctionnel alcool, facultativement deux quelconques parmi R¹ à R¹¹ proches l'un de l'autre, R¹/R¹¹ et/ou R³/R⁴, pris ensemble, peuvent former un noyau qui est une structure cyclique substituée ou non substituée, saturée ou insaturée, à condition que le composé comprenne un groupe fonctionnel alcoxysilyle, un groupe fonctionnel alcool, ou une combinaison de deux ou plus de ceux-ci, et où le groupe fonctionnel alcool du composé de formule (II) est choisi parmi un composé de formule -O-(CH₂)ₘ-OH où m varie de 1 à 20,
le groupe fonctionnel alcoxysilyle du composé de formule (III) est choisi parmi un groupe fonctionnel de formule : -(CH²)ₙ-Si(OR¹²)₃, où R¹² représente CₚH₂ₚ₊₁, p varie de 1 à 10, et n varie de 1 à 20,
le groupe fonctionnel alcoxysilyle du composé de formule générale (IV) est choisi parmi un groupe fonctionnel de formule : -O-(CH₂)_{q}-NH-C(O)-NH-(CH₂)ᵣ-Si(OR¹³)₃, où q et r varient indépendamment de 1 à 20, et R¹³ représente CₚH₂ₚ₊₁ où p varie de 1 à 10,
et le groupe fonctionnel alcoxysilyle du composé de formule générale (V) est choisi parmi un groupe fonctionnel de formule : -O-(CH₂)_{q}-O-C(O)-NH-(CH₂)ᵣ-Si(OR¹³)₃, où A¹ et A² sont choisis indépendamment parmi un atome d'oxygène et NH, q et r varient indépendamment de 1 à 20, et R¹³ représente CₚH₂ₚ₊₁ où p varie de 1 à 10.

2. Composition de revêtement de la revendication 1, dans laquelle la terpyridine forme un complexe avec un métal ou un sel métallique comprenant un métal choisi parmi l'europium, l'erbium, le cérium, le néodyme, le samarium, le terbium, le dysprosium, le gadolinium, l'holmium, le thulium, l'ytterbium, le lutétium, ou une combinaison de deux ou plus de ceux-ci.

3. Composition de revêtement de la revendication 2, dans laquelle le sel métallique comprend du nitrate d'europium.

4. Composition de revêtement de l'une des revendications 1 à 3, dans laquelle le matériau luminophore est présent en une quantité allant de 0,05% en poids à 5% en poids par rapport au poids sec d'un film après durcissement de la composition.

5. Système de revêtement comprenant un matériau de couche de finition et un matériau de couche primaire, dans lequel au moins l'un du matériau de couche de finition et du matériau de couche primaire comprend la composition de l'une quelconque des revendications 1 à 4, et dans lequel (i) le matériau de couche de finition comprend le matériau luminophore ; (ii) le matériau de couche primaire comprend le matériau luminophore ; ou (iii) à la fois le matériau de couche de finition et le matériau de couche primaire comprennent le matériau luminophore.

6. Article comprenant un revêtement formé à partir d'une composition de revêtement de l'une des revendications 1 à 4 ou de systèmes de revêtement de la revendication 5 disposés sur au moins une partie d'une surface de l'article, le revêtement comprenant un matériau luminophore.

7. Article de la revendication 6, dans lequel l'article comprend un matériau de substrat choisi parmi un polymère acrylique, un polyamide, un polyimide, un copolymère acrylonitrile-styrène, un chlorure de polyvinyle, un polycarbonate, un copolycarbonate, ou une combinaison de deux ou plus de ceux-ci.

8. Procédé de fabrication d'une composition de revêtement comprenant l'ajout d'un complexe métallique à une composition de couche de finition, à un matériau de couche primaire, ou aux deux, dans lequel le complexe métallique est un composé de terpyridine de formules : 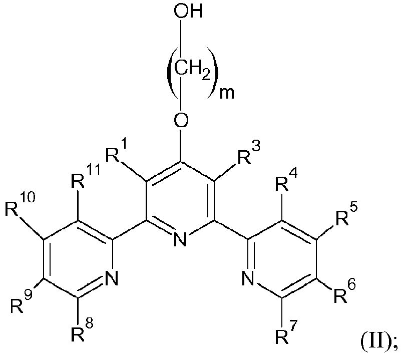 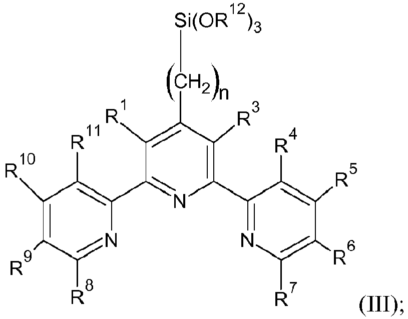 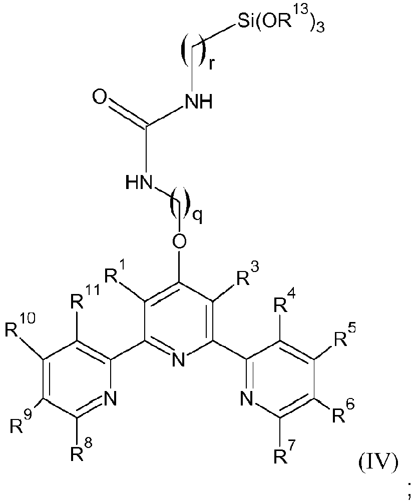 et/ou 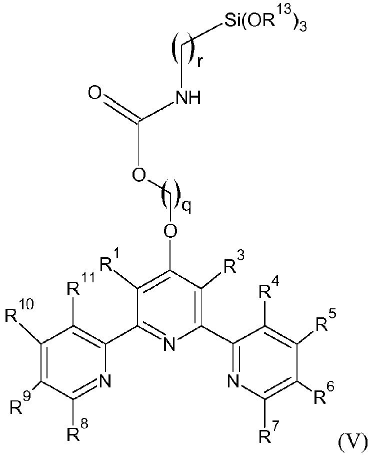
où R¹ à R¹¹ sont indépendamment choisis parmi un alkyle, un alkyle substitué, un aryle, un aryle substitué, un groupe fonctionnel inerte, un groupe fonctionnel alcoxysilyle et un groupe fonctionnel alcool, facultativement deux quelconques parmi R¹ à R¹¹ proches l'un de l'autre, R¹/R¹¹ et/ou R³/R⁴, pris ensemble, peuvent former un noyau qui est une structure cyclique substituée ou non substituée, saturée ou insaturée, à condition que le composé comprenne un groupe fonctionnel alcoxysilyle, un groupe fonctionnel alcool, ou une combinaison de deux ou plus de ceux-ci, et où le groupe fonctionnel alcool du composé de formule (II) est choisi parmi un composé de formule -O-(CH₂)ₘ-OH où m varie de 1 à 20,
le groupe fonctionnel alcoxysilyle du composé de formule (III) est choisi parmi un groupe fonctionnel de formule : -(CH²)ₙ-Si(OR¹²)₃, où R¹² représente CₚH₂ₚ₊₁, p varie de 1 à 10, et n varie de 1 à 20,
le groupe fonctionnel alcoxysilyle du composé de formule générale (IV) est choisi parmi un groupe fonctionnel de formule : -O-(CH₂)_{q}-NH-C(O)-NH-(CH₂)ᵣ-Si(OR¹³)₃, où q et r varient indépendamment de 1 à 20, et R¹³ représente CₚH₂ₚ₊₁ où p varie de 1 à 10,
et le groupe fonctionnel alcoxysilyle du composé de formule générale (V) est choisi parmi un groupe fonctionnel de formule : -O-(CH₂)_{q}-O-C(O)-NH-(CH₂)ᵣ-Si(OR¹³)₃, où A¹ et A² sont choisis indépendamment parmi un atome d'oxygène et NH, q et r varient indépendamment de 1 à 20, et R¹³ représente CₚH₂ₚ₊₁ où p varie de 1 à 10.
où la terpyridine forme un complexe avec un métal ou un sel métallique.

9. Procédé de la revendication 8, dans lequel le métal ou le sel métallique comprend un métal choisi parmi l'europium, l'erbium, le cérium, le néodyme, le samarium, le terbium, le dysprosium, le gadolinium, l'holmium, le thulium, l'ytterbium, le lutétium, ou une combinaison de deux ou plus de ceux-ci.
